**Europäisches Patentamt**

**European Patent Office**

**Office européen des brevets**

(11) Veröffentlichungsnummer: **0 425 058 B1**

# EUROPÄISCHE PATENTSCHRIFT

(45) Veröffentlichungstag der Patentschrift: **04.01.95**

(51) Int. Cl.6: **C22C 38/04**, B60J 5/04

(21) Anmeldenummer: **90250211.1**

(22) Anmeldetag: **16.08.90**

(54) Verwendung eines Stahls zur Herstellung von Türverstärkerrohren.

(30) Priorität: **26.10.89 DE 3935965**

(43) Veröffentlichungstag der Anmeldung:
**02.05.91 Patentblatt 91/18**

(45) Bekanntmachung des Hinweises auf die
Patenterteilung:
**04.01.95 Patentblatt 95/01**

(84) Benannte Vertragsstaaten:
**CH DE ES FR GB IT LI NL SE**

(56) Entgegenhaltungen:
DE-B- 1 239 481          DE-C- 617 765
DE-C- 746 005            FR-A- 768 468
GB-A- 440 894            US-A- 4 047 979

(73) Patentinhaber: **MANNESMANN Aktiengesellschaft**
**Postfach 10 36 41**
**D-40027 Düsseldorf (DE)**

(72) Erfinder: **von Hagen, Ingo, Dr.-Ing.**
**Schumannstrasse 1**
**D-4150 Krefeld 1 (DE)**
Erfinder: **Wieting, Enno, Dr.-Ing.**
**Kückelswerth 17**
**D-4030 Ratingen 6 (DE)**
Erfinder: **Prasser, Christoph, Dr.-Ing.**
**Bredeneyer Strasse 32**
**D-4300 Essen 1 (DE)**

(74) Vertreter: **Meissner, Peter E., Dipl.-Ing. et al**
**Meissner & Meissner,**
**Patentanwaltsbüro,**
**Postfach 33 01 30**
**D-14171 Berlin (DE)**

EP 0 425 058 B1

**Beschreibung**

Die Erfindung betrifft die Verwendung von Rohren aus speziell ausgewähltem Stahl zur Verstärkung von Kraftfahrzeugtüren.

Zum Schutz gegen seitliche Aufprallunfälle von Kraftfahrzeugen werden in die Fahrzeugtüren zur Aussteifung vielfach rohrförmige Verstärkungselemente eingesetzt. Die zur Herstellung dieser Verstärkungselemente verwendeten Stahlrohre müssen bestimmten Mindestanforderungen hinsichtlich Festigkeit, Zähigkeit und Arbeitsvermögen genügen, wenn sie ihrer Aufgabe, möglichst viel von der Aufprallenergie aufzunehmen, gerecht werden sollen. Unter vorgegebenen Prüfbedingungen müssen beispielsweise folgende Werte erreicht werden:

Zugfestigkeit $R_m \geq 1100$ N/mm$^2$

Streckgrenze $R_t \geq 800$ N/mm$^2$

Bruchdehnung $A_5 \geq 8$ %

Verformungsarbeit $W_{150} \geq 1900$ Joule

(je nach Abmessung des Profils)

Derartige Türverstärkerrohre werden üblicherweise durch Warmverformung hergestellt und erhalten die erforderliche Festigkeit durch eine Wasserhärtung. Ein bekannter Stahl enthält beispielsweise 0,18 % C, 0,4 % Si und 1,14 % Mn (Rest: Eisen und übliche Verunreinigungen).

Bei ihrer Weiterverarbeitung im Kraftfahrzeug werden die Türverstärkerrohre vielfach Einflüssen ausgesetzt, die die ursprünglich vorhandenen Werkstoffeigenschaften erheblich beeinträchtigen können. Beispiele hierfür sind Schweißarbeitsgänge, die bei den üblichen Stählen in der Wärmeeinflußzone in der Regel zu negativen Eigenschaftsveränderungen führen, oder auch die nachträgliche Verzinkung einer Türkonstruktion zum Zwecke des Korrosionsschutzes. Das Feuerverzinken wird nämlich bei Temperaturen bis zu etwa 500°C durchgeführt und bedeutet daher für die im gehärteten Zustand vorliegenden Türverstärkerrohre eine an sich ungewollte Anlaßbehandlung, die mit dem Nachteil eines entsprechenden Festigkeitsverlustes verbunden ist.

Aus der DE 37 28 476 C1 ist die Verwendung einer Stahllegierung als Werkstoff für die Herstellung von Türverstärkerrohren bekannt, die folgende Zusammensetzung aufweist (in Gewichts-%):

max. 0,35 % C

max. 0,50 % Si

max. 1,8 % Mn

max. 0,030 % P

max. 0,030 % S

> 0 - 1,5 % Ni

1,8 - 2,2 % Cr

0,4 - 0,7 % Mo

0,025 - 0,050 % Al

Rest Eisen und übliche Verunreinigungen.

Die Herstellung der Rohre durch Warmwalzen erfolgt dabei mit der Maßgabe, daß die Walzendtemperatur zwischen 980 und 1080°C liegt. Dadurch können, ohne daß es noch einer aufwendigen Wärmebehandlung bedarf, die genannten Mindestwerte von den hergestellten Rohren eingehalten werden, weil der verwendete Werkstoff lufthärtend ist. Über eine Änderung der Werkstoffeigenschaften durch eine Feuerverzinkung ist in dieser Schrift nichts ausgesagt. Ein Nachteil der dort beschriebenen Legierung ist darin zu erblicken, daß zur Herstellung teure Legierungselemente wie Cr, Ni und Mo in größeren Mengen eingesetzt werden müssen, so daß die steigenden Materialkosten den Einsparungen bei der entfallenen Wärmebehandlung entgegenwirken.

Aus der FR-A-768 468 ist ein Stahl bekannt, der für Konstruktionselemente unter anderem auch Rohre verwendbar ist, und dessen Zusammensetzung weitgehend der entspricht, wie sie für den vorliegenden Stahl gilt. Abweichend, und zwar höher, ist allerdings der Titangehalt, und es kommt kein Bor zur Anwendung. Schließlich ist eine Anlaßbehandlung vorgesehen.

Aufgabe der Erfindung ist es, einen Stahl als Werkstoff zur Herstellung von Türverstärkerrohren vorzuschlagen, der nicht nur am warmgewalzten Rohr die geforderten Mindesteigenschaften gewährleistet, sondern darüber hinaus auch nach Schweißvorgängen oder nach einer Feuerverzinkung diese Mindesteigenschaften noch erfüllt und dessen Herstellung mit möglichst wenig Kostenaufwand verbunden ist.

Gelöst wird diese Aufgabe erfindungsgemäß durch die Verwendung eines Stahls mit der im Anspruch 1 angegebenen Legierungszusammensetzung, bei der die Summe der Gehalte an Mn, Ni, Cr, Mo und des 10-fachen Gehaltes an V mindestens 4,5 Gewichts-% beträgt. Zur Steigerung der Zähigkeitseigenschaften enthält diese Legierung nach der Erfindung zusätzlich noch Ti in einer Menge, die über den zu erwartenden

2

Abbrand hinaus mindestens dem 3,4-fachen Gehalt an N entspricht, und sind außerdem 0,001 - 0,005 Gewichts-% B enthalten. Durch Ti soll der jeweils vorhandene und auf Grund der angewandten Schmelztechnik erfahrungsgemäß abschätzbare N-Gehalt (bei Erschmelzung schweißbarer Stähle sind ca. 50-70 ppm N üblich) abgebunden werden, um die volle Wirkung von B zu entfalten. Im allgemeinen ist es nicht sinnvoll, wesentlich über das Verhältnis Ti:N von 3,4:1 hinauszugehen.

Der erfindungsgemäß verwendete Stahl zeichnet sich insbesondere durch einen vergleichsweise hohen Anteil an Mn aus, das ein relativ preisgünstiges Legierungselement darstellt. Demgegenüber kann auf die teuren Legierungselemente Ni, Mo, V und Cr sogar völlig verzichtet werden, zumindest können die Anteile dieser Elemente drastisch abgesenkt werden. Voraussetzung hierzu ist lediglich, daß die im Anspruch 1 angegebene Summenformel hinsichtlich der Gehalte dieser Elemente erfüllt ist. Dies kann, falls gewünscht, auch bereits allein durch einen Mn-Anteil von mindestens 4,5 Gewichts-% gewährleistet werden. Da der erfindungsgemäße Stahl an Luft härtet, entfallen aufwendige Wärmebehandlungsmaßnahmen zur Erzielung der geforderten technologischen Eigenschaften ebenso wie bei dem aus der DE 37 28 476 C1 bekannten Stahl vollständig, so daß seine Verwendung für die Herstellung von Türverstärkerrohren erhebliche wirtschaftliche Vorteile mit sich bringt. Völlig überraschend war es, daß die aus diesem Werkstoff hergestellten Rohre nach einem Anlassen bei etwa 500°C im Vergleich zu üblichen wasserhärtenden Werkstoffen nur einen Bruchteil des Festigkeitsverlustes und damit der Abnahme des Arbeitsvermögens aufweisen. Damit können Türverstärkerrohre aus diesen Werkstoffen ohne weiteres zur Verbesserung des Korrosionsschutzes einer Feuerverzinkung unterzogen und auch geschweißt werden, ohne daß unzulässige Einbrüche der Festigkeitseigenschaften in Kauf genommen werden müssen.

Beispiele für Gehalte an untenstehenden Legierungskomponenten von erfindungsgemäß verwendbaren Legierungen sind in der folgenden Tabelle angegeben (in Gewichts-%):

| C | Si | Mn | P | S | Al$_{ges}$ | Cr | Mo | V |
|---|----|----|---|---|-----|----|----|----|
| 0,19 | 0,62 | 3,95 | 0,008 | 0,0030 | 0,037 | 0,63 | 0,30 | 0,000 |
| 0,19 | 0,59 | 4,02 | 0,009 | 0,0025 | 0,037 | 0,57 | 0,29 | 0,000 |
| 0,19 | 0,34 | 4,05 | 0,009 | 0,0026 | 0,031 | 0,57 | 0,02 | 0,049 |
| 0,19 | 0,33 | 4,00 | 0,007 | 0,0019 | 0,029 | 0,55 | 0,02 | 0,051 |

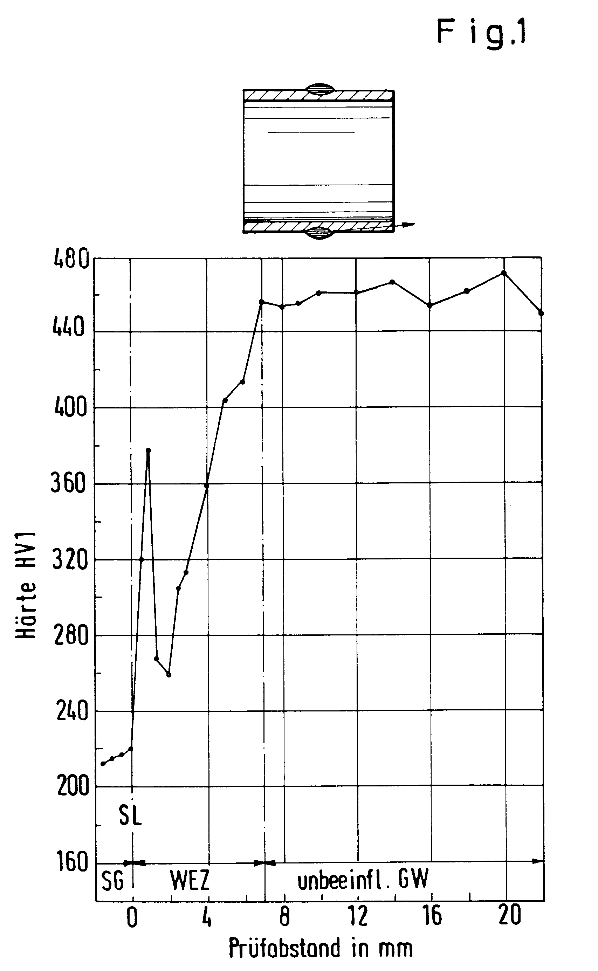

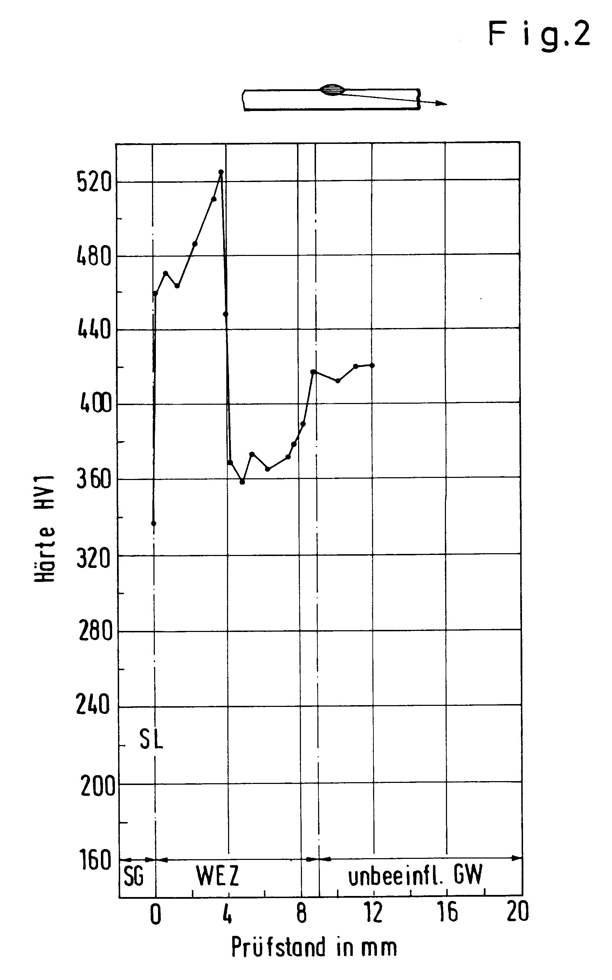

Das positive Verhalten des erfindungsgemäßen Stahls in Bezug auf Werkstoffeigenschaftsveränderungen infolge eines Schweißarbeitsgangs geht aus der Gegenüberstellung der Härteverläufe an Probestücken hervor, die in den Figuren 1 und 2 dargestellt sind. Figur 1 zeigt den Härteverlauf auf einem Rohrstück von 38 mm Durchmesser und 2,3 mm Wanddicke aus einem herkömmlichen wassergehärteten Stahl mit 0,18 % C, 0,4 % Si und 1,14 % Mn (Rest: Eisen und übliche Verunreinigungen), auf dem eine Probeschweißung nach dem MAG-Verfahren vorgenommen wurde. Im unbeeinflußten Grundwerkstoff (GW) liegt die Härte HV1 bei Werten von 460, während sie in der Wärmeeinflußzone (WEZ) auf Werte bis zu 260 absinkt. Die Härte HV1 des Schweißgutes (SG) liegt bei etwa 220, was aber in diesem Zusammenhang nicht weiter von Interesse ist, da dieser Wert lediglich von dem verwendeten Material der Schweißelektrode abhängt.

Ein Probeblech von 5 mm Dicke aus einem luftgehärteten Stahl mit 0,19 % C, 3,95 % Mn und 0,6 % Cr (Rest: Eisen und übliche Verunreinigungen) zeigt demgegenüber bei einer Probeschweißung nach dem WIG-Verfahren mit einem anderen Schweißzusatzwerkstoff als beim Vergleichsversuch ein deutlich besseres Verhalten, wie aus Figur 2 hervorgeht. Obwohl die Wärmeeinflußzone mit etwa 9 mm sogar noch etwas breiter ist als im Vergleichsbeispiel (7 mm) fällt hierbei die Härte HV1 von Werten um 420 im unbeeinflußten Grundwerkstoff lediglich bis auf Werte um 360 in der Wärmeeinflußzone ab. Sie liegt damit um einen Wert von etwa 100 höher als im ersten Versuch.

Das Verhalten der gleichen Werkstoffe, wie sie in den Versuchen gemäß Figur 1 und Figur 2 verwendet wurden, wurde auch im Hinblick auf ein Anlassen untersucht. Hierzu wurden Vergleichsversuche an Proberohren der Abmessung 30 x 3,2 mm durchgeführt, die in üblicher Weise durch Warmwalzen mit anschließendem Wasser- bzw. Lufthärten hergestellt wurden.

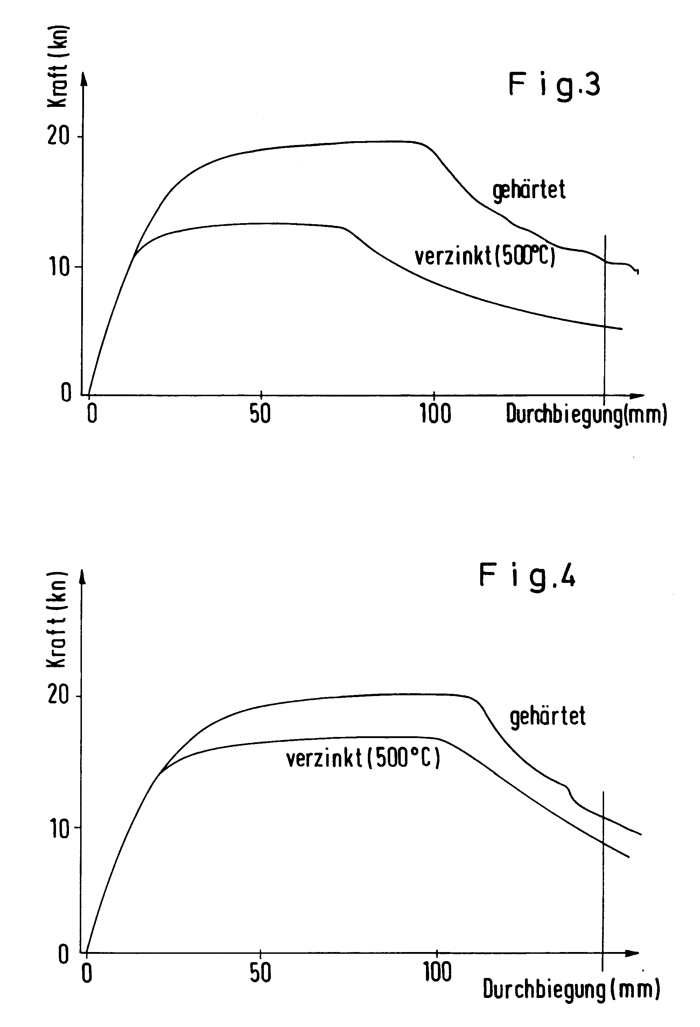

Figur 3 zeigt im oberen Kurvenzug den Kraftverlauf über der entsprechend den vorgegebenen Prüfbedingungen für Türverstärkerrohre durchgeführten Durchbiegung eines Proberohrstücks aus dem wassergehärteten Stahl. Die Fläche unter der Kurve stellt ein Maß für das Arbeitsvermögen dieses Rohrstücks dar. Im unteren Kurvenzug ist der entsprechende Kraftverlauf für ein gleichartiges Rohr dargestellt, das aber zuvor einer Anlaßbehandlung durch eine Feuerverzinkung bei etwa 500°C unterzogen worden war. Infolge der erheblich geringeren Biegekräfte ergibt sich hierbei eine Abnahme des Arbeitsvermögens im interessierenden Bereich der Durchbiegung um etwa 40 %. Ein entsprechender Vergleichsversuch für ein luftgehärtetes bzw. ein nach dem Härten durch Feuerverzinken bei etwa 500°C angelassenes Rohrstück aus dem Stahl mit den erfindungsgemäßen Gehalten an C, Mn, Cr ist in Figur 4 dargestellt. Das bessere Verhalten dieses Werkstoffs ist offensichtlich, da die untere Kurve deutlich näher an der oberen Kurve liegt. Dementsprechend beträgt der Verlust an Arbeitsvermögen infolge der Feuerverzinkung nur noch etwa 15 % bezogen auf den ursprünglichen gehärteten Zustand. Damit kann der geforderte Mindestwert des Arbeitsvermögens ohne weiteres eingehalten werden. Auch die übrigen geforderten technologischen Eigenschaften sind bei den erfindungsgemäßen Türverstärkerrohren gegeben.

Wenn erfindungsgemäß die zusätzlichen Gehalte an Ti und B vorgeschen sind, kommt zu den Festigkeitseigenschaften nach den Fig. 2 und 4 noch eine verbesserte Zähigkeit hinzu.

**Patentansprüche**

1. Verwendung von Rohren aus beruhigt Vergossenem Stahl, bestehend aus (in Gewichts-%)
   0,15 - 0,25 % C
   3,40 - 6,10 % Mn
   0 - 1,0 % Ni
   0 - 1,0 % Cr
   0 - 1,0 % Mo
   0 - 0,15 % V
   max. 0,03 % P
   max. 0,03 % S
   max. 0,6 % Si
   max. 0,05 % Al
   Rest Eisen und übliche Verunreinigungen zur Verstärkung von Kraftfahrzeugtüren mit der Maßgabe, daß die folgende Beziehung für die Summe der Legierungsanteile (in Gewichts-%) erfüllt ist:

   Mn + Ni + Cr + Mo + 10 x V $\geq$ 4,5 Gewichts-%,

   wobei zur Verbesserung der Zähigkeitseigenschaften zusätzlich Ti in mindestens der 3,4-fachen Menge des üblichen z.B. 50-70 ppm betragenden Gehalt es an N und außerdem 0,001 - 0,005 Gewichts-% B enthalten sind.

**Claims**

1. Use of tubes made of killed cast steel consisting of (in % by weight)
   0.15 - 0.25 % C
   3.40 - 6.10 % Mn
   0 - 1.0 % Ni
   0 - 1.0 % Cr
   0 - 1.0 % Mo
   0 - 0.15 % V
   max. 0.03 % P
   max. 0.03 % S
   max. 0.6 % Si
   max. 0.05 % Al
   the remainder iron and the usual impurities,
   for reinforcing motor vehicle doors provided that the following relation for the sum of the alloying components (in % by weight) is satisfied:

   Mn + Ni + Cr + Mo + 10 x V $\geq$ 4.5 % by weight,

   including in addition Ti in a quantity at least 3.4 times the usual content of N of 50 - 70 ppm for example, and also 0.001 - 0.005 % by weight of B for improved toughness properties.

**Revendications**

1. Utilisation de tubes en acier coulé et calmé, comportant (en pourcentage de poids) :
   0,15 - 0,25 % C
   3,40 - 6,10 % Mn

0 - 1,0 % Ni
0 - 1,0 % Cr
0 - 1,0 % Mo
0 - 0,15 % V
au maximum 0,03 % P
au maximum 0,03 % S
au maximum 0,6 % Si
au maximum 0,05 % Al

le reste étant du fer et des impuretés usuelles,

pour le renforcement de portes de véhicules automobiles sous réserve que la relation suivante pour la somme des éléments de l'alliage (en pourcentage de poids) soit vérifiée :

$$Mn \ + \ Ni \ + \ Cr \ + \ Mo \ + \ 10 \ x \ V \geqq 4,5 \ \% \ du \ poids,$$

comportant pour l'amélioration des propriétés de dureté de plus Ti correspondant à au moins 3,4 fois la quantité de la teneur usuelle en N, contenant par exemple 50 - 70 p.p.m, et en outre B correspondant à 0,001 - 0,005 % du poids.

# F i g.1

F i g.2

F i g. 3

Kraft (kn)

gehärtet

verzinkt(500°C)

Durchbiegung(mm)

F i g. 4

Kraft (kn)

gehärtet

verzinkt(500°C)

Durchbiegung (mm)